# EUROPEAN PATENT SPECIFICATION

(11) **EP 1 993 897 B1**
(45) Date of publication and mention of the grant of the patent: **06.10.2010**
(21) Application number: 06716967.2
(22) Date of filing: 03.03.2006
(51) Int. Cl.: B62D 25/12, B62D 25/10

(54) **BODY PANEL**
AUFBAUBEPLANKUNG
TOLE DE CARROSSERIE

(43) Date of publication of application: 26.11.2008
(73) Proprietor: Volvo Lastvagnar AB, 405 08 Göteborg (SE)
(72) Inventor: SVEDBERG, Jonas, S-416 79 Göteborg (SE); NILSSON, Jan, S-425 39 Hisings-Kärra (SE)
(74) Representative: Fröhling, Werner Otto
(86) International application number: PCT/SE2006/000281
(87) International publication number: WO 2007/100279

(56) References cited:
- EP-A2- 0 072 490
- DE-A1- 2 435 588
- DE-A1- 3 609 800
- DE-A1- 10 152 181
- US-A- 4 186 476
- US-A- 4 206 944
- US-A- 4 915 441
- US-A1- 2003 196 297
- US-B1- 6 257 656
- DATABASE WPI Week 200369, Derwent Publications Ltd., London, GB; Class Q17, AN 2003-727081, XP003017922 & JP 2003 276644 A (TOYOTA JIDOSHA KK) 02 October 2003

## Description

### TECHNICAL FIELD

The present invention concerns a hinge bracket for pivotally mounting a body panel on a vehicle and a method of mounting a body panel on a vehicle. The invention is intended for use particularly but not exclusively in trucks, buses and heavy good vehicles but is applicable to any other vehicle such as a passenger car.

### BACKGROUND OF THE INVENTION

The hood and side panels at the front of a vehicle protect the engine and other electrical and mechanical components inside the engine compartment from precipitation and other road debris that could cause significant damage thereto. The hood is usually pivotably mounted by means of hinges located beneath the windscreen of a vehicle and it provides access to the engine compartment for service and maintenance. Body panels that are mounted on a vehicle have to be accurately aligned with respect to adjacent body panels (often to within a tolerance of 3-10 mm or less), which can make the task of mounting a body panel on a vehicle a complex and time consuming job.

US patent no. 3628622 discloses a truck where the engine hood and the front fenders and sidewalls of the truck's engine compartment are formed in a single piece and hinged to the driver's cab below the windscreen in such a way that the hood and fenders can be swung upwardly. The hinged unit has to be accurately aligned relative to the truck body and sufficient clearance space has to be provided around it to facilitate engine compartment access. A disadvantage with such an arrangement is that the hinges are exposed to harsh weather conditions and road debris and are therefore susceptible to rust and corrosion. Furthermore the hinges are visible from the outside of the truck, which adversely affects the aesthetics of the truck.

US patent no. 6695395 describes a connection for a grill panel of a motor vehicle, incorporating a pair of mountings for the grill panel. Each mounting is associated with a hinge for a side door of the vehicle to provide a safe and dimensionally stable connection for the grill panel. Such an arrangement simplifies assembly work since the hinges and panel mountings can be fitted in a single operation; however the manufacture of such a connection is relatively complex. Furthermore the side door hinges have to be dimensioned not only for the large loads arising from the side doors but also for the loads arising from the vehicle's grill panel.

US-A-6257656 shows a body panel mounting system for a vehicle in accordance with the introductory parts of claims 1, 3 and 11.

US-A-4206944 describes a vehicle boot lid or bonnet hinge, having spring and sliding link to give counterbalancing effect.

US-A-4186476 discloses a system and a fitting method for motor vehicle hood using pads attached at forward corners and preparing body to receive hood by fitting latch.

### SUMMARY OF THE INVENTION

The object of the invention is to provide a hinge bracket, a body panel and a method of mounting a body panel on a vehicle whereby the body panel is accurately aligned in a simple manner relative to the support structure on which it is mounted and whereby the play between adjacent body panels is easily adjustable.

This object is achieved by a hinge bracket, i.e. a fixture for attaching hinge means to a support structure, for pivotally mounting a body panel on a vehicle. The hinge bracket comprises at least one substantially L-shaped opening that is arranged to receive at least one pin, i.e. a protruding part of any shape, associated with a structural component of a vehicle, such as a pillar, i.e. a pair of structural posts, to thereby align the body panel that is attached to the hinge bracket with respect to the vehicle. The at least one substantially L-shaped opening is arranged so that one arm of the substantially L-shaped opening extends in a substantially longitudinal direction of the vehicle thus allowing the body panel to be positioned at a predetermined position along the longitudinal direction of the vehicle and/or one arm of said at least one substantially L-shaped opening extends in a substantially vertical direction of the vehicle thus allowing the body panel to be positioned at a predetermined height.

Said at least one pin may be the outwardly projecting end or head of a screw or bolt or it may be integrally formed with the structural component. The term "substantially L-shaped opening" is intended to mean a hole or a groove having two arms of a predetermined length which form an angle that is less than, greater than or equal to 90°. It should be noted that the arms of the substantially L-shaped opening need not necessarily be rectilinear. Such a hinge bracket serves to align and maintain a body panel in a desired position prior to securing the body panel in place on the structural component of the vehicle.

Guiding said at least one pin into and along said at least one substantially L-shaped opening allows a body panel that is attached to the hinge bracket to be accurately aligned in two directions corresponding to the directions in which the arms of said at least one substantially L-shaped opening extend. Furthermore, when mounted, the hinge arrangement of the body panel will be hidden inside the vehicle and thereby protected from damage caused by harsh weather and road debris. Hidden hinges also result in a more aesthetically pleasing vehicle appearance.

According to an embodiment of the invention said at least one substantially L-shaped opening comprises at least a section that is at least one of the following: rectilinear, curved, kinked or tapered at a pin-receiving end thereof whereby its lateral dimension diminishes gradually in the direction of travel of the pin. Such a feature facilitates the reception of a pin into said at least one substantially L-shaped opening so that great precision is not required to introduce a pin into an opening.

The present invention also concerns a body panel comprising a hinge arrangement for pivotable attachment of the body panel to a vehicle. Said hinge arrangement comprises at least one hinge bracket for non-pivotable attachment to the vehicle and hinge means to define at least one axis about which the body panel can pivot with respect to said at least one hinge bracket. Said at least one hinge bracket comprises at least one substantially L-shaped opening that is arranged to receive at least one pin. The at least one substantially L-shaped opening is arranged so that one arm of the substantially L-shaped opening extends in a substantially longitudinal direction (X) of the vehicle thus allowing the body panel to be positioned at a predetermined position along the longitudinal direction (X) of the vehicle, and/or one arm of said at least one substantially L-shaped opening extends in a substantially vertical direction (Z) of the vehicle thus allowing the body panel to be positioned at a predetermined height. The position of the body panel in the lateral direction of the vehicle (Y) may be adjusted by altering the position of the points at which the body panel is secured to the structural component of the vehicle.

According to an embodiment of the invention said at least one substantially L-shaped opening comprises at least a section that is at least one of the following: rectilinear, curved, kinked or tapered at a pin-receiving end thereof whereby its lateral dimension diminishes gradually in the direction of travel of the pin.

According to a further embodiment of the invention the body panel comprises an inner and an outer layer whereby the inner layer provides strength and the outer layer serves as a cover. According to a yet further embodiment of the invention the body panel comprises at least one of the following materials: a metal, such as steel, a sheet moulded compound or a reinforced polymer such as glass fibre-reinforced polyester.

According to an embodiment of the invention the body panel constitutes a hood or grill panel or a rear panel. According to another embodiment of the invention the body panel comprises at least one side panel that is integrally formed as a single unit with a hood or grill panel or rear panel, such as the door of a cargo compartment whereby said panels may be mounted in a substantially horizontal, vertical or inclined position on a vehicle. The invention is however applicable to any pivotably movable vehicle body panel. By producing a hood and side panels, for example, as a single component the manufacture and assembly of a vehicle is simplified and becomes more cost-effective since fewer components need to be manufactured, aligned and assembled. The integrally formed body panel and side panel(s) eliminate the need to consider the play between the body panel and the side panel(s) and will provide a more rigid body panel compared to the substantially flat hoods according to the prior art.

According to another embodiment of the invention said at least one substantially L-shaped opening is arranged so that the body panel is held at an extremity thereof under the influence of gravity, thereby facilitating assembly work. The term "extremity" is intended to mean the end of an opening however an extremity may also be provided by delimiting means, located somewhere along an arm of the opening, which define a point beyond which a pin cannot travel further along an arm of the opening.

The present invention also concerns a vehicle comprising a body panel and a hinge bracket according to any of the embodiments of the invention.

The present invention further concerns a method of mounting a body panel according to any of the embodiments of the invention on a structural component of a vehicle, such as a pillar, said structural component being provided with at least one pin for cooperation with said at least one substantially L-shaped opening. The method comprises the step of displacing the body panel with respect to the structural component, i.e. by moving one with respect to the other, so that said at least one pin is accommodated in said at least one substantially L-shaped opening i.e. so that said at least one pin enters some part of said at least one L-shaped opening. The method also comprises the step of further displacing the body panel until said at least one pin reaches an extremity of said at least one L-shaped opening. The method also comprises the step of securing the body panel to the structural component once said at least one pin has reached an extremity of said at least one substantially L-shaped opening.

Once the body panel is in place it may be fixedly attached, by screwing the hinge bracket onto the structural component for example. If, when the body panel is in place, it is found that the body panel does is not correctly aligned with respect to adjacent body panels, it may for example be positioned 3 mm too high, the dimensions of said at least one L-shaped opening in the hinge bracket may be altered, by making the length of a vertical arm of said at least one L-shaped opening 3 mm longer, in order to achieve correct alignment of the body panel. The mounting can take place by displacing the body panel in a substantially longitudinal direction of the vehicle when the body panel is in a closed position or an open position.

According to an embodiment of the invention said structural component is the A-pillar, i.e. the foremost pair of structural posts of a vehicle, or said structural component is the rearmost pair of structural posts of a vehicle.

According to a further embodiment of the invention the method comprises the step of mounting the body panel so that it lies outside the sides or side doors of the vehicle. According to another embodiment of the invention the method comprises the step of mounting the body panel so that the optimal play between the outside of the sides or side doors of the vehicle and the inside of the body panel is approximately 3 mm.

### BRIEF DESCRIPTION OF THE DRAWINGS<

The present invention will hereinafter be further explained by means of non-limiting examples with reference to the appended figures where;
- Figure 1: shows in a schematic manner a vehicle comprising a body panel according to the prior art,
- Figures 2a and b: show in a schematic manner a vehicle comprising a body panel according to an embodiment of the invention in profile and from above respectively, and
- Figure 3: depicts a hinge bracket according to an embodiment of the invention and
- Figure 4: depicts a hinge bracket according to another embodiment of the invention.

It should be noted that the drawings have not been drawn to scale and that the dimensions of certain features have been exaggerated for the sake of clarity.

### DETAILED DESCRIPTION OF EMBODIMENTS

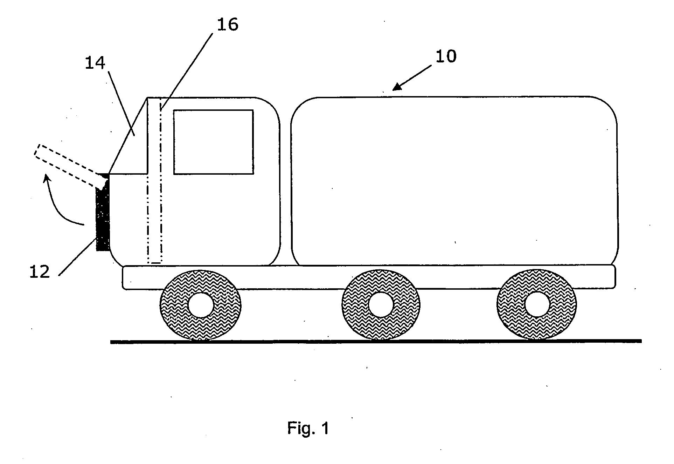

Figure 1 shows a vehicle 10 comprising a body panel 12 according to the prior art. The vehicle 10 has a windscreen 14 that is flanked by two A-pillars 16 of a body support structure (only the left A-pillar is shown). The body panel 12 is pivotably mounted on the vehicle 10 by means of a hinge located under the windscreen 14. The hinge is exposed and visible from the outside of the vehicle.

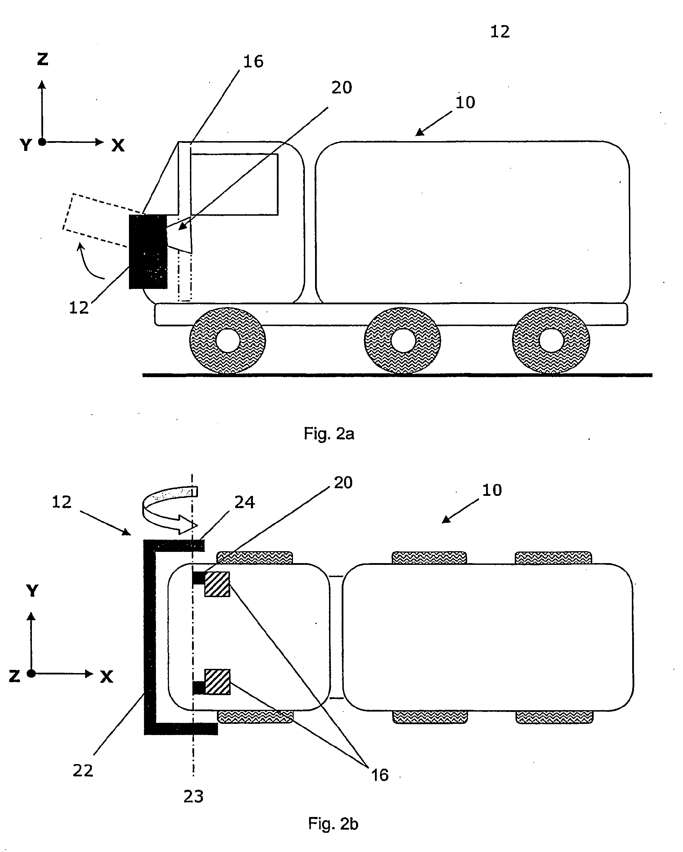

Figure 2a shows a vehicle 10 having a body panel 12 according to an embodiment of the invention. The body panel 12 comprises a hinge arrangement comprising a hinge bracket 20 for attachment to the vehicle and hinge means to define at least one axis, such as a horizontally mounted axis, a vertically mounted axis or about an axis mounted at any other inclination, about which the body panel 12 pivots with respect to the hinge bracket, 20. The hinge bracket 20 is secured to the A-pillar 16 of the vehicle 10 by screwing for example.

Figure 2b shows the same vehicle 10 from above. The body panel 12 comprises front 22 and side panels 24 integrally formed as a single unit. The inside of the body panel 12 lies approximately 3 mm outside the sides of the vehicle. A hinge bracket 20 is attached to each of the structural posts constituting the A-pillar of the vehicle 10. The hinge bracket 20 is associated with hinge means, such as a multi-link hinge, that define at least one axis about which the body panel 12 pivots with respect to the hinge bracket 20.

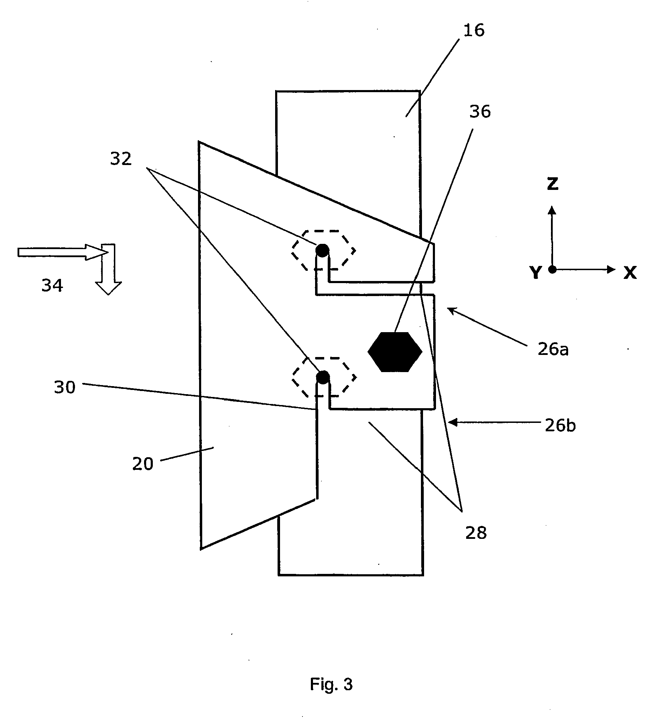

Figure 3 depicts a hinge bracket 20 that is attached to the body panel 12 of a vehicle, by screwing for example. In the illustrated embodiment the hinge bracket 20 comprises two L-shaped openings 26, though it is to be understood that, depending on circumstance, one such opening would be sufficient. The upper L-shaped opening 26a has a first arm 28 extending in a substantially longitudinal direction (X) of the vehicle 10 which is open at one end and a second arm 30 extending substantially along a vertical axis (Z) of the vehicle 10 which is delimited by the end of the opening. The lower L-shaped opening 26b has a first arm 28 extending in a substantially longitudinal direction (X) of the vehicle 10 which is open along one side and at one end and a second arm 30 extending substantially along a vertical axis (Z) of the vehicle 10 which is delimited by the end of the opening. The hinge bracket 20 is associated with hinge means that define at least one axis about which the body panel 12 pivots with respect to the hinge bracket 20. The dimensions of the L-shaped openings will vary depending on the application and the length of the arms of the L-shaped openings can range from a few mm to about 20 cm.

The hinge bracket 20 is mounted on the A-pillar 16 of the vehicle by displacing the body panel 12 with respect to the A-pillar so that guiding pins 32, such as M8 screws that are screwed into the A-pillar, enter the L-shaped openings 26. The body panel 12 is further displaced so that said pins 32 travel along the first arms 28 of the L-shaped openings 26. The body panel 12 is subsequently displaced so that the pins 32 travel along the second arm 30 of the L-shaped openings 26 and come to rest at the end of the second arms 30. This may be done by displacing the body panel towards the vehicle in a longitudinal direction (X) of the vehicle and then lowering it into place as indicated by the arrows 34. The hinge bracket 20 is subsequently secured to the A-pillar 16, by screwing for example, while the body panel is in a closed position or an almost closed position. As a result simple, secure and accurate mounting of the body panel is achieved.

It should be noted that the substantially L-shaped opening(s) do not necessarily need to have an open end for receiving a pin. The opening(s) can be arranged to have two closed ends whereby a pin enters the opening(s) somewhere along one arm of the opening(s) rather than at an open-ended extremity thereof.

In the embodiment shown in figure 3 the hinge bracket 20 is provided with three securing points (32) whereby two of the screws that are used to secure the hinge bracket 20 to the pillar 16 are also used as pins, i.e. guiding means, to accurately align a body panel 12 and one screw (36) is used to solely to secure the hinge bracket 20 to the pillar 16 once it has been aligned. Any number and arrangement of securing points and pins may of course be utilized. Furthermore, any number of hinge brackets may be utilized to mount a body panel on the pillar of a vehicle.

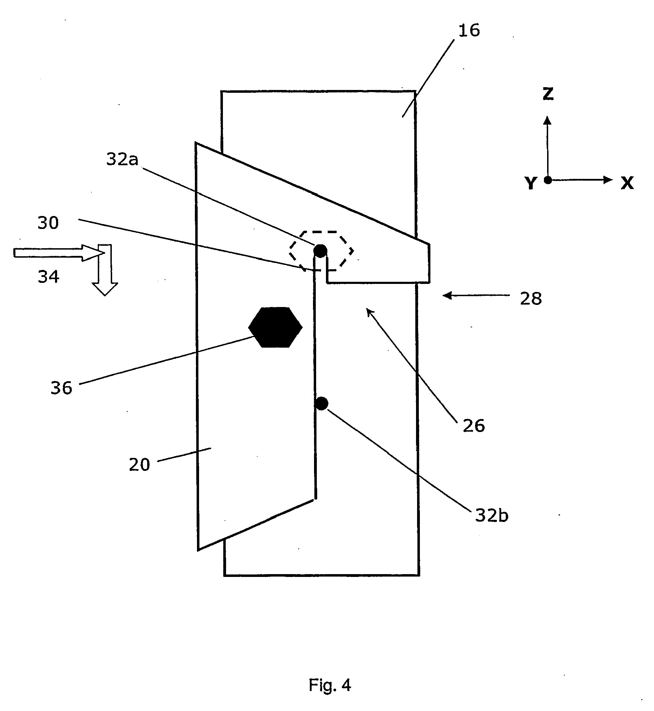

Figure 4 depicts a hinge bracket 20 that is attached to the body panel 12 of a vehicle. In the illustrated embodiment the hinge bracket 20 comprises one L-shaped opening 26 comprising a first arm 28 extending in a substantially longitudinal direction (X) of the vehicle 10 which is open along one side and at one end and a second arm 30 extending substantially along a vertical axis (Z) of the vehicle which is delimited by the end of the opening. The hinge bracket 20 is associated with hinge means that define an axis about which the body panel 12 pivots with respect to the hinge bracket 20.

The hinge bracket 20 is mounted on the A-pillar 16 of the vehicle by displacing the body panel 12 with respect to the A-pillar so that the upper pin 32a, such as an M8 screw that is screwed into the A-pillar, enters the L-shaped opening 26. The body panel 12 is further displaced so that said upper pin 32a travels along the first arm 28 of the L-shaped opening 26. The body panel 12 is subsequently displaced so that the upper pin 32a travels along the second arm 30 of the L-shaped opening 26 and comes to rest at the end of the second arm 30. This may be done by displacing the body panel towards the vehicle in a longitudinal direction (X) of the vehicle and then lowering it into place as indicated by the arrows 34. A second lower pin 32b is used to position the hinge bracket 20 in the longitudinal direction (X) of the vehicle but is not used to position the hinge bracket 20 along the vertical axis (Z) of the vehicle. The hinge bracket 20 is subsequently secured to the A-pillar 16, by screwing for example.

## Claims

1. Hinge bracket (20) for pivotally mounting a body panel (12) on a vehicle (10), said hinge bracket comprising at least one substantially L-shaped opening (26) that is arranged to receive at least one pin (32) associated with a structural component of the vehicle, such as a pillar (16), i.e. a pair of structural posts, **characterized in that** said at least one substantially L-shaped opening (26) is arranged so that one arm (28) of the substantially L-shaped opening (26) extends in a substantially longitudinal direction (X) of the vehicle thus allowing the body panel (12) to be positioned at a predetermined position along the longitudinal direction (X) of the vehicle and/or one arm (30) of said at least one substantially L-shaped opening (26) extends in a substantially vertical direction (Z) of the vehicle thus allowing the body panel (12) to be positioned at a predetermined height.

2. Hinge bracket (20) according to claim 1, **characterized in that** said at least one substantially L-shaped opening (26) comprises at least a section that is at least one of the following: rectilinear, curved, kinked or tapered at a pin-receiving end thereof whereby its lateral dimension diminishes gradually in the direction of travel of the pin (32).

3. Body panel (12) comprising a hinge arrangement for pivotable attachment of the body panel (12) to a vehicle (10), said hinge arrangement comprising at least one hinge bracket (20) for non-pivotable attachment to the vehicle (10) and hinge means to define at least one axis about which the body panel (12) can pivot with respect to said at least one hinge bracket (20), wherein said at least one hinge bracket (20) comprises at least one substantially L-shaped opening (26) that is arranged to receive at least one pin (32) associated with a structural component of the vehicle, such as a pillar (16) to thereby align said body panel (12) with respect to the vehicle (10), **characterized in that** said at least one substantially L-shaped opening (26) is arranged so that one arm (28) of the substantially L-shaped opening (26) extends in a substantially longitudinal direction (X) of the vehicle thus allowing the body panel (12) to be positioned at a predetermined position along the longitudinal direction (X) of the vehicle and/or one arm (30) of said at least one substantially L-shaped opening (26) extends in a substantially vertical direction (Z) of the vehicle thus allowing the body panel (12) to be positioned at a predetermined height.

4. Body panel (12) according to claim 3, **characterized in that** said at least one substantially L-shaped opening (26) comprises at least a section that is at least one of the following: rectilinear, curved, kinked or tapered at a pin-receiving end thereof whereby its lateral dimension diminishes gradually in the direction of travel of the pin (32).

5. Body panel (12) according claim 3 or 4, **characterized in that** it comprises an inner and an outer layer whereby the inner layer provides strength and the outer layer serves as a cover.

6. Body panel (12) according to any of claims 3-5, **characterized in that** it comprises at least one of the following materials: a metal, such as steel, a sheet moulded compound or a reinforced polymer such as glass fibre-reinforced polyester.

7. Body panel (12) according to any of claims 3-6, **characterized in that** it constitutes a hood (22) or grill panel or a rear panel.

8. Body panel (12) according to any of claims 3-7, **characterized in that** it comprises at least one side panel (24) that is integrally formed as a single unit with a hood (22) or grill panel or rear panel.

9. Body panel (12) according to any of claims 3-8, **characterized in that** said at least one substantially L-shaped opening (26) is arranged so that the body panel (12) is held at an extremity thereof under the influence of gravity.

10. Vehicle, **characterized in that** it comprises a hinge bracket according to any of claims 1-2 and/or a body panel (12) according to any of claims 3-9.

11. Method of mounting a body panel (12) according to any of claims 3-9 on a structural component of a vehicle, such as a pillar (16), said structural component being provided with at least one pin (32) for cooperation with said at least one substantially L-shaped opening (26), comprising the step of displacing the body panel (12) with respect to the structural component (16) so that said at least one pin (32) is accommodated in said at least one substantially L-shaped opening (26) and further displacing the body panel (12) until said at least one pin (32) reaches an extremity of said at least one L-shaped opening (26), **characterized in that** it comprises the step of securing the body panel (12) to the structural component (16) once said at least one pin (32) has reached an extremity of said at least one substantially L-shaped opening (26).

12. Method according to claim 11, **characterized in that** said structural component (16) is the A-pillar, i.e. the foremost pair of structural posts of a vehicle, or said structural component (16) is the rearmost pair of structural posts of a vehicle.

13. Method according to any of claims 11-12, **characterized in that** it comprises the step of mounting the body panel (12) so that it lies outside the sides or side doors of the vehicle (10).

14. Method according to claim 13, **characterized in that** it comprises the step of mounting the body panel (12) so that the optimal play between the outside of the sides or side doors of the vehicle and the inside of the body panel (12) is approximately 3 mm.

## Patentansprüche

1. Gelenkhalterung (20) für eine schwenkbare Anbringung einer Karosserieverkleidung (12) an einem Fahrzeug (10), wobei die Gelenkhalterung wenigstens eine im Wesentlichen L-förmige Öffnung (26) umfasst, die so ausgebildet ist, dass sie wenigstens einen Stift (32) aufnimmt, der einem Konstruktionsteil des Fahrzeugs zugeordnet ist, wie z.B. einer Säule (16), d.h. einem Paar von Konstruktionspfosten, **dadurch gekennzeichnet, dass** wenigstens eine im Wesentlichen L-förmige Öffnung (26) so ausgebildet ist, das sich ein Arm (28) der im Wesentlichen L-förmigen Öffnung (26) im Wesentlichen in Längsrichtung (X) des Fahrzeugs erstreckt, wodurch die Karosserieverkleidung (12) an einer vorherbestimmten Position entlang der Längsrichtung (X) des Fahrzeugs positioniert werden kann, und/oder ein Arm (30) der wenigstens einen im Wesentlichen L-förmigen Öffnung (26) sich in einer im Wesentlichen vertikalen Richtung (Z) des Fahrzeugs erstreckt, wodurch die Fahrzeugverkleidung (12) auf einer vorherbestimmten Höhe positioniert werden kann.

2. Gelenkhalterung (20) nach Anspruch 1, **dadurch gekennzeichnet, dass** die wenigstens eine im Wesentlichen L-förmige Öffnung (26) wenigstens einen Abschnitt umfasst, der wenigstens eines von Folgendem ist: geradlinig, gekrümmt, geknickt oder an seinem Stift aufnehmenden Ende verjüngt, wodurch sich seine Querdimension in Richtung des Weges des Stiftes (32) allmählich verringert.

3. Karosserieverkleidung (12) mit einer Gelenkanordnung für eine schwenkbare Befestigung der Karosserieverkleidung (12) an einem Fahrzeug (10), wobei die Gelenkanordnung wenigstens eine Gelenkhalterung (20) für eine nicht schwenkbare Befestigung an dem Fahrzeug (10) und eine Gelenkeinrichtung zur Definierung wenigstens einer Achse umfasst, um die die Karosserieverkleidung (12) bezüglich der wenigstens einen Gelenkhalterung (20) schwenken kann, wobei die wenigstens eine Gelenkhalterung (20) wenigstens eine im Wesentlichen L-förmige Öffnung (26) umfasst, die so ausgebildet ist, dass sie wenigstens einen Stift (32) aufnehmen kann, der einem Konstruktionsteil des Fahrzeugs, wie z.B. einer Säule (16), zugeordnet ist, um **dadurch** die Karosserieverkleidung (12) bezüglich des Fahrzeugs (10) auszurichten, **dadurch gekennzeichnet, dass** wenigstens eine im Wesentlichen L-förmige Öffnung (26) so ausgebildet ist, das sich ein Arm (28) der im Wesentlichen L-förmigen Öffnung (26) im Wesentlichen in Längsrichtung (X) des Fahrzeugs erstreckt, wodurch die Karosserieverkleidung (12) an einer vorherbestimmten Position entlang der Längsrichtung (X) des Fahrzeugs positioniert werden kann, und/oder ein Arm (30) der wenigstens einen im Wesentlichen L-förmigen Öffnung (26) sich in einer im Wesentlichen vertikalen Richtung (Z) des Fahrzeugs erstreckt, wodurch die Fahrzeugverkleidung (12) auf einer vorherbestimmten Höhe positioniert werden kann.

4. Karosserieverkleidung (12) nach Anspruch 3, **dadurch gekennzeichnet, dass** die wenigstens eine im Wesentlichen L-förmige Öffnung (26) wenigstens einen Abschnitt umfasst, der wenigstens eines von Folgendem ist: geradlinig, gekrümmt, geknickt oder an seinem Stift aufnehmenden Ende verjüngt, wodurch sich seine Querdimension in Richtung des Weges des Stiftes (32) allmählich verringert.

5. Karosserieverkleidung (12) nach Anspruch 3 oder 4, **dadurch gekennzeichnet, dass** sie eine innere und eine äußere Lage umfasst, wobei die innere Lage für Festigkeit sorgt und die äußere Lage als Abdeckung dient.

6. Karosserieverkleidung (12) nach einem der Ansprüche 3 bis 5, **dadurch gekennzeichnet, dass** sie wenigstens eines der folgenden Materialien umfasst: ein Metall, wie z.B. Stahl, eine Harzmatte oder ein verstärktes Polymer, wie z.B. ein glasfaserverstärktes Polyester.

7. Karosserieverkleidung (12) nach einem der Ansprüche 3 bis 6, **dadurch gekennzeichnet, dass** sie eine Haube (22) oder eine Grillverkleidung oder eine Heckverkleidung bildet.

8. Karosserieverkleidung (12) nach einem der Ansprüche 3 bis 7, **dadurch gekennzeichnet, dass** sie wenigstens eine Seitenverkleidung (24) umfasst, die als eine einzige Einheit mit einer Haube (22) oder einer Grillverkleidung oder einer Heckverkleidung einteilig ausgebildet ist.

9. Karosserieverkleidung (12) nach einem der Ansprüche 3 bis 8, **dadurch gekennzeichnet, dass** die wenigstens eine im Wesentlichen L-förmige Öffnung (26) so ausgebildet ist, dass die Karosserieverkleidung (12) an einem Ende von ihr unter Einfluss von Schwerkraft gehalten wird.

10. Fahrzeug, **dadurch gekennzeichnet, dass** es eine Gelenkhalterung nach einem der Ansprüche 1 bis 2 und/oder eine Karosserieverkleidung (12) nach einem der Ansprüche 3 bis 9 umfasst.

11. Verfahren zur Anbringung einer Karosserieverkleidung (12) nach einem der Ansprüche 3 bis 9 an einem Konstruktionsteil eines Fahrzeugs, wie z.B. einer Säule (16), wobei das Konstruktionsteil mit wenigstens einem Stift (32) für eine Zusammenwirkung mit der wenigstens einen im Wesentlichen L-förmigen Öffnung (26) versehen ist, mit dem Schritt der Verschiebung der Karosserieverkleidung (12) bezüglich des Konstruktionsteils (16) so, dass der wenigstens eine Stift (32) in der wenigstens einen im Wesentlichen L-förmigen Öffnung (26) aufgenommen wird, und einer weiteren Verschiebung der Karosserieverkleidung (12), bis der wenigstens eine Stift (32) ein Ende der wenigstens einen L-förmigen Öffnung (26) erreicht, **dadurch gekennzeichnet, dass** es den Schritt der Befestigung der Karosserieverkleidung (12) an dem Konstruktionsteil (16) umfasst, sobald der wenigstens eine Stift (32) ein Ende der wenigstens einen im Wesentlichen L-förmigen Öffnung (26) erreicht hat.

12. Verfahren nach Anspruch 11, **dadurch gekennzeichnet, dass** das Konstruktionsteil (16) eine A-Säule, d.h. das vorderste Paar von Konstruktionspfosten eines Fahrzeugs ist, oder das Konstruktionsteil (16) das hinterste Paar von Konstruktionspfosten eines Fahrzeugs ist.

13. Verfahren nach einem der Ansprüche 11 bis 12, **dadurch gekennzeichnet, dass** es den Schritt der Anbringung der Karosserieverkleidung (12) umfasst, so dass sie außerhalb der Seiten oder der Seitentüren des Fahrzeugs (10) liegt.

14. Verfahren nach Anspruch 13, **dadurch gekennzeichnet, dass** es den Schritt der Befestigung der Karosserieverkleidung (12) umfasst, so dass das optimale Spiel zwischen der Außenseite der Seiten oder der Seitentüren des Fahrzeugs und der Innenseite der Karosserieverkleidung (12) ungefähr 3 mm beträgt.

## Revendications

1. Support articulé (20) pour monter de manière pivotante une tôle de carrosserie (12) sur un véhicule (10), ledit support articulé comprenant au moins une ouverture sensiblement en forme de L (26) qui est agencée pour recevoir au moins une broche (32) associée à un élément de structure du véhicule, tel qu'un montant (16), c'est-à-dire une paire de montants structurels, **caractérisé en ce que** ladite au moins une ouverture sensiblement en forme de L (26) est agencée de manière à ce qu'un bras (28) de l'ouverture sensiblement en forme de L (26) s'étende dans une direction sensiblement longitudinale (X) du véhicule, en permettant ainsi de positionner la tôle de carrosserie (12) dans une position prédéterminée le long de la direction longitudinale (X) du véhicule et/ou qu'un bras (30) de ladite au moins une ouverture sensiblement en forme de L (26) s'étende dans une direction sensiblement verticale (Z) du véhicule, en permettant ainsi de positionner la tôle de carrosserie (12) à une hauteur prédéterminée.

2. Support articulé (20) selon la revendication 1, **caractérisé en ce que** ladite au moins une ouverture sensiblement en forme de L (26) comprend au moins une section qui est au moins une des suivantes : une section rectiligne, incurvée, tordue ou effilée au niveau de son extrémité de réception de broche, de sorte que sa dimension latérale diminue graduellement dans la direction de déplacement de la broche (32).

3. Tôle de carrosserie (12) comprenant un agencement articulé pour une fixation pivotante de la tôle de carrosserie (12) sur un véhicule (10), ledit agencement articulé comprenant au moins un support articulé (20) pour une fixation non pivotante sur le véhicule (10) et des moyens d'articulation pour définir au moins un axe autour duquel la tôle de carrosserie (12) peut pivoter par rapport audit au moins un support articulé (20), dans laquelle ledit au moins un support articulé (20) comprend au moins une ouverture sensiblement en forme de L (26) qui est agencée pour recevoir au moins une broche (32) associée à un élément de structure du véhicule, tel qu'un montant (16), afin d'aligner ainsi ladite tôle de carrosserie (12) par rapport au véhicule (10), **caractérisée en ce que** ladite au moins une ouverture sensiblement en forme de L (26) est agencée de manière à ce qu'un bras (28) de l'ouverture sensiblement en forme de L (26) s'étende dans une direction sensiblement longitudinale (X) du véhicule, permettant ainsi de positionner la tôle de carrosserie (12) dans une position prédéterminée le long de la direction longitudinale (X) du véhicule et/ou qu'un bras (30) de ladite au moins une ouverture sensiblement en forme de L (26) s'étende dans une direction sensiblement verticale (Z) du véhicule, permettant ainsi de positionner la tôle de carrosserie (12) à une hauteur prédéterminée.

4. Tôle de carrosserie (12) selon la revendication 3, **caractérisée en ce que** ladite au moins une ouverture sensiblement en forme de L (26) comprend au moins une section qui est au moins une des suivantes : une section rectiligne, incurvée, tordue ou effilée au niveau de son extrémité de réception de broche, de sorte que sa dimension latérale diminue graduellement dans la direction de déplacement de la broche (32).

5. Tôle de carrosserie (12) selon la revendication 3 ou 4, **caractérisée en ce qu'**elle comprend une couche intérieure et extérieure, de sorte que la couche intérieure fournit une résistance et la couche extérieure sert de recouvrement.

6. Tôle de carrosserie (12) selon l'une quelconque des revendications 3 à 5, **caractérisée en ce qu'**elle comprend au moins un des matériaux suivants : du métal, tel que de l'acier, un mélange à mouler en feuille ou un polymère renforcé tel qu'un polyester renforcé en fibre de verre.

7. Tôle de carrosserie (12) selon l'une quelconque des revendications 3 à 6, **caractérisée en ce qu'**elle constitue un capot (22) ou un panneau de calandre ou une custode.

8. Tôle de carrosserie (12) selon l'une quelconque des revendications 3 à 7, **caractérisée en ce qu'**elle comprend au moins un flanc (24) qui est formé en un seul bloc sous la forme d'une seule unité avec un capot (22), un panneau de calandre ou une custode.

9. Tôle de carrosserie (12) selon l'une quelconque des revendications 3 à 8, **caractérisée en ce que** ladite au moins une ouverture sensiblement en forme de L (26) est agencée de manière à ce que la tôle de carrosserie (12) soit maintenue au niveau de son extrémité sous l'influence de la gravité.

10. Véhicule, **caractérisé en ce qu'**il comprend un support articulé selon l'une quelconque des revendications 1 et 2 et/ou une tôle de carrosserie (12) selon l'une quelconque des revendications 3 à 9.

11. Procédé de montage d'une tôle de carrosserie (12) selon l'une quelconque des revendications 3 à 9 sur un élément de structure d'un véhicule, tel qu'un montant (16), ledit élément de structure étant muni d'au moins une broche (32) coopérant avec ladite au moins une ouverture sensiblement en forme de L (26), comprenant l'étape consistant à déplacer la tôle de carrosserie (12) par rapport à l'élément de structure (16) de manière à ce que ladite au moins une broche (32) soit reçue dans ladite au moins une ouverture sensiblement en forme de L (26) et qui consiste en outre à déplacer la tôle de carrosserie (12) jusqu'à ce que ladite au moins une broche (32) atteigne une extrémité de ladite au moins une ouverture sensiblement en forme de L (26), **caractérisé en ce qu'**il comprend l'étape consistant à fixer la tôle de carrosserie (12) sur l'élément de structure (16) une fois que ladite au moins une broche (32) a atteint l'extrémité de ladite au moins une ouverture sensiblement en forme de L (26).

12. Procédé selon la revendication 11, **caractérisé en ce que** ledit élément de structure (16) est le montant avant, c'est-à-dire la paire la plus en avant de montants structurels d'un véhicule, ou ledit élément de structure (16) est la paire la plus en arrière de montants structurels d'un véhicule.

13. Procédé selon l'une quelconque des revendications 11 à 12, **caractérisé en ce qu'**il comprend l'étape consistant à monter la tôle de carrosserie (12) de manière à ce qu'elle se trouve en dehors des côtés ou des portes latérales du véhicule (10).

14. Procédé selon la revendication 13, **caractérisé en ce qu'**elle comprend l'étape consistant à monter la tôle de carrosserie (12) de manière à ce que le jeu optimal entre l'extérieur des côtés ou des portes latérales du véhicule et l'intérieur de la tôle de carrosserie (12) soit approximativement de 3 mm.
